# EUROPÄISCHE PATENTSCHRIFT

(11) **EP 1 387 866 B1**
(45) Veröffentlichungstag und Bekanntmachung des Hinweises auf die Patenterteilung: **21.12.2005**
(21) Anmeldenummer: 02742923.2
(22) Anmeldetag: 27.04.2002
(51) Int. Cl.: C09B 63/00

(54) **VERLACKTE MONOAZOPIGMENTE AUF DER BASIS VON NAPHTHOLSULFONSAEUREN**
LAKED MONOAZO PIGMENTS BASED ON NAPHTHOLSULFONIC ACIDS
PIGMENTS MONOAZOIQUES LAQUES A BASE D'ACIDES NAPHTOL-SULFONIQUES

(30) Priorität: 09.05.2001 DE 10122374
(43) Veröffentlichungstag der Anmeldung: 11.02.2004
(73) Patentinhaber: Clariant GmbH, 65929 Frankfurt am Main (DE)
(72) Erfinder: METZ, Hans, Joachim, 64285 Darmstadt (DE); NABAR, Uday T., Plot no. 323 Sham Sadan, Vile Parle (East), Mumbai 400 057 (IN); MORGENROTH, Frank, 63477 Maintal (DE); PATIL, Chandrashekhar D., 16, Anil Apartment, Thane 400 602, Maharashtra (IN); DEVAL, Sunil D., 4/5, Ambekar Nagar, Mumbai 400 022 (IN)
(74) Vertreter: Hütter, Klaus
(86) Internationale Anmeldenummer: PCT/EP2002/004696
(87) Internationale Veröffentlichungsnummer: WO 2002/090444

(56) Entgegenhaltungen:
- EP-A- 0 445 342
- WO-A-98/13425
- DE-C- 141 257
- DE-C- 175 828
- GB-A- 693 598
- US-A- 4 810 302
- US-A- 5 869 625
- J OAKES; P. GRATTON: "Kinetic Investigs. of the Oxidation of Arylazonaphthol Dyes " JOURNAL OF THE CHEMICAL SOCIETY, PERKIN TRANSACTIONS 2, Nr. 10, 19. Oktober 1998 (1998-10-19), Seiten 2201-2206, XP002216705 GB

## Beschreibung

Die vorliegende Erfindung betrifft neue verlackte Azopigmente auf der Basis von Naphtholsulfonsäuren und ein Verfahren zu ihrer Herstellung.

Verlackte Monoazopigmente aus der Reihe der Naphtholsulfonsäuren sind prinzipiell bekannt, z.B. als Pigment Yellow 104, P. Orange 19, P. Red 60, 66 und 67. Sie werden in Druckfarben, Tinten und zur Einfärbung von Kunststoffen eingesetzt. Es ist aber auch bekannt, dass diese Pigmente schlechte Echtheitseigenschaften besitzen, namentlich schlechte Lichtechtheiten und außerdem unzureichende Farbstärken.

Farbmittel des genannten Typs mit verbesserten Echtheitseigenschaften wurden beispielsweise in der japanischen Auslegeschrift 50-24988 oder der WO 98/13425 beschrieben. Die dort beschriebenen Pigmente besitzen jedoch nicht gleichzeitig hohe Lichtechtheiten und hohe Farbstärken.

Ähnliche verlackte Monoazopigmente werden in den Druckschriften DE,C,175,828; DE,C,141,257; US,A,4,810,302 Sowie US,A, 5,869, 625 offenbart.

Ziel der vorliegenden Erfindung war es daher, verlackte gelbe bis rote Azopigmente zu finden, die gleichzeitig hohe Lichtechtheiten und hohe Farbstärken besitzen.

Überraschenderweise wurde gefunden, dass verlackte Monoazopigmente mit dem erfindungsgemäßen Substitutionsmuster die gewünschten Eigenschaften besitzen.

Gegenstand der vorliegenden Erfindung sind Verbindungen der Formel (1) 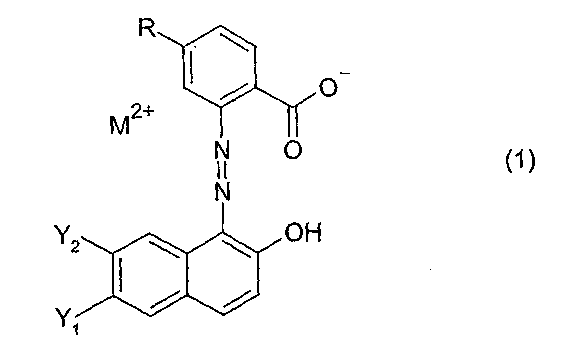 worin
- R: die Bedeutung H oder Cl,
- M²⁺: die Bedeutung Ca²⁺oder Sr²⁺,
Y₁ = H und Y₂ = SO₃⁻; oder Y₁ = SO₃⁻ und Y₂ = H haben.

Bevorzugte Verbindungen im Sinne der vorliegenden Erfindung sind:
Verbindung (1a) mit R = H, M²⁺ = Sr²⁺, Y₁ = SO₃⁻ und Y₂ = H;
Verbindung (1b) mit R = Cl; M²⁺ = Sr²⁺, Y₁ = SO3⁻ und Y₂ = H;
Verbindung (1c) mit R = Cl; M²⁺ = Ca²⁺, Y₁ = SO₃⁻ und Y₂ = H;
Verbindung (1d) mit R = H; M²⁺ = Sr²⁺, Y₁ = H und Y₂ = SO₃⁻.

Besonders bevorzugt ist die Verbindung (1b).

Die erfindungsgemäßen Pigmente können durch Diazotierung von Anthranilsäure oder 4-Chloranthranilsäure, anschließende Kupplung mit einer Naphtholsulfonsäure der Formel (2) 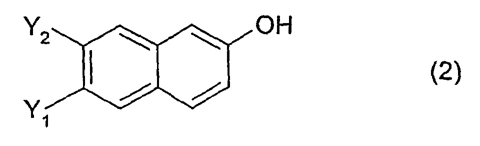 und Verlackung mit einem Calcium- oder Strontiumsalz hergestellt werden.

Für die Diazotierungsreaktion eignen sich Alkalimetallnitrite oder die Alkylnitrite kurzkettiger Alkane, zusammen mit ausreichend starken Mineralsäuren.

Besonders geeignet sind Natriumnitrit und Salzsäure. Die Reaktion kann in einem Temperaturbereich von -5°C bis + 30°C durchgeführt werden, vorzugsweise zwischen 0°C und 10°C. Obwohl nicht erforderlich, können bei der Diazotierung nichtionogene, anionische oder kationische oberflächenaktive Substanzen zugegen sein. Gegebenenfalls können auch weitere Hilfsmittel, wie natürliche oder synthetische Harze oder Harzderivate, verwendet werden.

Die Naphtholsulfonsäuren der Formel (2), nämlich 2-Hydroxy-naphthalin-6-sulfonsäure (Schäffer-Säure) und 2-Hydroxy-naphthalin-7-sulfonsäure (F-Säure), können als freie Säuren oder als Salze, wie z.B. Alkali- oder Ammoniumsalze, eingesetzt werden. Die Kupplung ist nach der direkten oder indirekten Methode möglich, erfolgt vorzugsweise jedoch direkt, d.h. das Diazoniumsalz wird zur vorgelegten Kuppelkomponente gegeben. Die Kuppelreaktion kann in einem Temperaturbereich zwischen -5°C und 80°C durchgeführt werden, vorzugsweise zwischen 5°C und 25°C, und bei einem pH-Wert zwischen pH 4 und pH 14, insbesondere zwischen pH 9 und pH 12. Wie die Diazotierungsreaktion kann auch die Kupplung in Gegenwart oberflächenaktiver Substanzen, Harze sowie Harzderivate oder üblicher Additive durchgeführt werden. Im allgemeinen wird die Kuppelkomponente, bezogen auf die Diazoniumverbindung, in einem leichten Überschuss eingesetzt, vorzugsweise wird 1 Äquivalent Diazokomponente mit 1,02 bis 1,10 Äquivalenten der Kuppelkomponente umgesetzt.

Der Zusatz von alkalilöslichen harzartigen Hilfsmitteln oder Mischungen davon während oder nach der Kupplung, sowie vor oder während der Verlackung verbessert die Dispergierbarkeit der Pigmente. Zweckmäßigerweise werden die harzartigen Hilfsmittel oder Mischungen davon in Form ihrer wässrig-alkalischen Lösungen eingesetzt. Als harzartige Hilfsmittel eignen sich natürliche und synthetische Harze. Als vorteilhaft sind Kolophonium, disproportioniertes oder hydriertes Kolophonium, sowie Kolophoniumderivate zu nennen. Bevorzugt sind natürliche Harzsäuren, wie Abietinsäure, Dihydroabietinsäure, Tetrahydroabietinsäure, Laevopimarsäure, Dextropimarsäure und Isodextropimarsäure, wie sie in handelsüblichen Kolophoniumarten vorliegen. Besonders bevorzugt ist das kommerziell erhältliche, Harz Rosin N, das die Harzsäuren Abietinsäure, Dehydroabetinsäure, Neoabietinsäure, Palustrinsäure, Isopimarsäure, Pimarsäure und Sandaracopimarsäure enthält, oder ein dem Rosin N äquivalentes Handelsprodukt. Neben den aufgezählten Harzen und deren Derivaten, können auch Alkydharze oder synthetische Kohlenwasserstoffharze mit hoher Säurezahl eingesetzt werden. Die genannten Harze werden vorzugsweise im Anschluss an die Kupplungsreaktion der Reaktionsmischung zugefügt.

Die Verlackung der hergestellten Kupplungsprodukte erfolgt durch Zugabe von Calcium- oder Strontiumsalzen oder deren wässrigen Lösungen. Vorzugsweise verwendet man eine wässrige Lösung eines der genannten Metallsalze. Geeignete Metallsalze sind z.B. Calciumchlorid oder-nitrat sowie Strontiumchlorid oder-nitrat, besonders geeignet sind wässrige Metallsalzlösungen von Calciumchlorid bzw. Strontiumchlorid. Die Verlackung erfolgt zweckmäßigerweise bei einer Temperatur zwischen 25 und 80°C, bevorzugt zwischen 50 und 60°C.

Nach der Verlackung werden die erfindungsgemäßen Verbindungen bevorzugt einer Wärmebehandlung in wässrigem, wässrig-organischem oder organischem Medium bei Temperaturen zwischen 80 und 200°C, ggf. unter Druck, und zweckmäßigerweise für 1 bis 6 Stunden unterworfen, insbesondere in Gegenwart der vorstehend genannten harzartigen Hilfsmittel. Anschließend können die erhaltenen Pigmentsuspensionen auf die übliche Weise filtriert, der Presskuchen mit Wasser salzfrei gewaschen, getrocknet und gemahlen werden.

Die Verbindungen der Formel (1) lassen sich zum Pigmentieren von hochmolekularen organischen Materialien natürlicher oder synthetischer Herkunft einsetzen, beispielsweise von Kunststoffen, Harzen, Lacken, Anstrichfarben oder elektrophotographischen Tonern und Entwicklern, sowie von Tinten und Druckfarben.

Hochmolekulare organische Materialien, die mit den erfindungsgemäßen Verbindungen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, beispielsweise Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen. Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäßen Verbindungen als Blend oder in Form von Präparationen oder Dispersionen zu benutzen. Bezogen auf das zu pigmentierende, hochmolekulare organische Material setzt man die erfindungsgemäßen Verbindungen in einer Menge von 0,05 bis 30 Gew.-%, vorzugsweise 0,1 bis 15 Gew.-% ein.

Die erfindungsgemäßen Verbindungen sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Polymerisationstoner sowie Spezialtoner.

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäßen Verbindungen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Verbindungen als Farbmittel in Ink-Jet Tinten auf wässriger und nichtwässriger Basis sowie in solchen Tinten, die nach dem Hot-melt-Verfahren arbeiten, geeignet.

Weiterhin sind die erfindungsgemäßen Verbindungen auch als Farbmittel für Farbfilter sowohl für die additive wie subtraktive Farberzeugung geeignet.

Zur Beurteilung der Eigenschaften der nach der Erfindung hergestellten Pigmente auf dem Lacksektor wurde aus der Vielzahl der bekannten Lacke ein aromatenhaltiger Alkydmelaminharzlack (AM-Lack) auf Basis eines mittelöligen, nicht trocknenden Alkydharzes ausgewählt. Zur Beurteilung der Eigenschaften der nach der Erfindung hergestellten Pigmente auf dem Kunststoffsektor wurden aus der Vielzahl der bekannten Kunststoffe Polyethylen und Weichpolyvinylchlorid ausgewählt.

Die erfindungsgemäßen Pigmente zeichnen sich durch hervorragende Echtheitseigenschaften aus, insbesondere besitzen sie gleichzeitig hohe Lichtechtheiten und Farbstärken. Sie enthalten keine für die Umwelt bedenklichen Schwermetalle. Die aufgezählten Eigenschaften qualifizieren die erfindungsgemäßen Pigmente insbesondere zum Einsatz als Farbmittel im Druckbereich (insbesondere Druckfarben, Herstellung von Ink-Jet Tinten) sowie zur Verwendung in Lacken und in Kunststoffen, Farbfiltern, Tonern und zur Einfärbung von Saatgut.

Mit dem Begriff "Teile" sind in den folgenden Beispielen und Vergleichsbeispielen Gewichtsteile gemeint.

### Beispiel 1

### a) Zubereitung von Rosin N Lösung

Zu 4000 Teilen Wasser gibt man 88 Teile einer wässrigen Natriumhydroxidlösung (40 % w/w) und erhitzt auf 90°C. Innerhalb ca. 1 Stunde werden portionsweise 800 Teile festes Rosin N (Fa. Dujadwala and Company, Mumbai, Indien) zugegeben. Danach erhitzt man ca. 30 Minuten zum Sieden, bis man eine Lösung erhalten hat und füllt mit Wasser auf eine Gesamtmenge von 8000 Teilen Rosin N Lösung auf.

### b) Diazotierung

51,5 Teile 4-Chloranthranilsäure werden in 350 Teilen Wasser angerührt und nach Zugabe von 48,4 Teilen wässriger Natriumhydroxidlösung (40 % w/w) solange gerührt, bis sich das Amin vollständig gelöst hat. Die erhaltene Lösung kühlt man auf 10°C und versetzt mit 51,8 Teilen wässriger Natriumnitritlösung (40 % w/w). In einem zweiten Gefäß werden 300 Teile Wasser und 108,8 Teile Salzsäure (30 w/w) vorgelegt und durch Zugabe von Eis auf 5°C gekühlt. Bei einer Temperatur zwischen 0 und 5°C tropft man innerhalb von 10 bis 15 Minuten unter Rühren zu der Säure/Eisvorlage die alkalische Lösung der 4-Chloranthranilsäure. Nach der Zugabe der Natriumnitritlösung rührt man bei einer Temperatur zwischen 5 und 10°C
1 Stunde nach. Im Anschluss wird der Nitritüberschuss durch Zugabe von Amidosulfonsäure beseitigt.

### c) Kupplung

Man legt eine Mischung aus 200 Teilen Wasser und 500 Teilen Eis vor. Zu dieser Vorlage werden unter Rühren 70,6 Teile 2-Hydroxy-naphthalin-6-sulfonsäure gegeben und anschließend durch Zugabe von wässriger Natriumhydroxidlösung (40 % w/w) ein pH-Wert von 12 bis 13 eingestellt. Zu der erhaltenen Lösung tropft man innerhalb von 15 bis 20 Minuten das Diazoniumsalz der 4-Chloranthranilsäure aus a) bei einer Temperatur zwischen 5 und 10°C zu und rührt 1 Stunde nach. Während der Nachrührzeit lässt man die Temperatur der Reaktionsmischung von ca. 10°C auf ca. 20°C ansteigen. Wenn keine Diazoniumverbindung und nur noch Spuren der Kuppelkomponente nachweisbar sind, versetzt man unter Rühren mit 150 Teilen der gemäß a) hergestellten Rosin N Lösung und rührt weitere 10 bis 15 Minuten. Dann wird der pH-Wert durch Zugabe von Salzsäure (10 % w/w) auf pH 5 bis 6 eingestellt.

### d) Verlackung

Die Reaktionsmischung wird auf 55°C erhitzt. Bei dieser Temperatur tropft man innerhalb von ca. 10 Minuten eine Lösung von 95,1 Teilen Strontiumchlorid in 300 Teilen Wasser zu und rührt, bis die Verlackung vollständig ist (ca. eine halbe Stunde).

### e) Nachbehandlung des Rohpigments

Nach der Verlackung wird die Pigmentsuspension in einem Autoklaven innerhalb einer Stunde auf 125°C erhitzt und eine weitere Stunde bei dieser Temperatur gerührt. Nach dieser Zeit lässt man auf ca. 30°C abkühlen und filtert das Pigment ab, wobei der Filterkuchen mit Wasser salzfrei gewaschen wird. Der Filterkuchen wird getrocknet und gemahlen. Man erhält 144 Teile eines roten Pigments: Verbindung (1b).

### Beispiel 2

### a) Zubereitung von Rosin N Lösung

Wie in Beispiel 1 beschrieben.

### b) Diazotierung

41,1 Teile Anthranilsäure werden in 360 Teilen Wasser vorgelegt und unter Rühren mit 121,0 Teilen Salzsäure (30 % w/w) versetzt. Dann kühlt man durch Zugabe von Eis auf 2 bis 5°C und tropft innerhalb von 10 bis 15 Minuten 62,2 Teile einer wässrigen Natriumnitritlösung (40 % w/w) zu. Anschließend rührt man bei 5°C eine Stunde lang. Im Anschluss wird der Nitritüberschuss durch Zugabe von Amidosulfonsäure beseitigt.

### c) Kupplung

Man legt eine Mischung aus 200 Teilen Wasser und 500 Teilen Eis vor. Zu dieser Vorlage werden unter Rühren 70,6 Teile 2-Hydroxy-naphthalin-6-sulfonsäure gegeben und anschließend durch Zugabe von wässriger Natriumhydroxidlösung (40 % w/w) ein pH-Wert von 12 bis 13 eingestellt. Zu der erhaltenen Lösung tropft man innerhalb von 15 bis 20 Minuten das Diazoniumsalz der Anthranilsäure bei einer Temperatur zwischen 5 und 10°C zu und rührt 1 Stunde nach. Während der Nachrührzeit lässt man die Temperatur der Reaktionsmischung von ca. 10°C auf ca. 20°C ansteigen. Wenn keine Diazoniumverbindung und nur noch Spuren der Kuppelkomponente nachweisbar sind, versetzt man unter Rühren mit 150 Teilen der gemäß a) hergestellten Rosin N Lösung und rührt weitere 10 bis 15 Minuten. Dann wird der pH-Wert durch Zugabe von Salzsäure (10 % w/w) auf pH 5 bis 6 eingestellt.

### d) Verlackung

Die Reaktionsmischung wird auf 55°C erhitzt. Bei dieser Temperatur tropft man innerhalb von ca. 10 Minuten eine Lösung von 95,1 Teilen Strontiumchlorid in 300 Teilen Wasser zu und rührt weitere zwei Stunden nach.

### e) Nachbehandlung

Die erhaltene Suspension des Rohpigmentes wird durch Zugabe von Salzsäure (30 % w/w) auf pH 4,0 eingestellt, dann wird innerhalb einer Stunde auf 95°C erhitzt und eine weitere Stunde bei dieser Temperatur gerührt. Nach dieser Zeit lässt man auf ca. 30°C abkühlen und filtert das Pigment ab, wobei der Filterkuchen mit Wasser salzfrei gewaschen wird. Der Filterkuchen wird getrocknet und gemahlen. Man erhält 138 Teile eines roten Pigments: Verbindung (1a).

### Beispiel 3

Man geht, abgesehen von den folgenden zwei Punkten, wie in Beispiel 1 vor:
1. Zur Verlackung setzt man anstelle der Strontiumchloridlösung eine Lösung von 66,6 Teilen Calciumchlorid in 300 Teilen Wasser ein.
2. Das erhaltene Rohpigment wird nicht im Autoklaven, sondern, wie in Beispiel 2 beschrieben, nachbehandelt.

Man erhält 118 Teile eines orangen Pigments: Verbindung (1 c).

### Beispiel 4

Man geht wie in Beispiel 2 vor. Anstelle der 2-Hydroxy-naphthalin-6-sulfonsäure setzt man jedoch 70,6 Teile 2-Hydroxy-naphthalin-7-sulfonsäure ein.
Man erhält 124 Teile eines orangen Pigments: Verbindung (1d).

### Vergleichsbeispiele 1 bis 4:

### Vergleichsbeispiel 1:

Wie in der WO 98/13425 (Beispiel 2) beschrieben, wird 2-Amino-5-chloro-4-methylbenzolsulfonsäure (CLT-Säure) auf das Kaliumsalz der 2-Hydroxynaphthalin-6-sulfonsäure (Kaliumsalz der Schäffer-Säure) gekuppelt und mit Strontium verlackt.

### Vergleichsbeispiel 2:

Wie in der WO 98/13425 (Beispiel 4) beschrieben, wird 2-Amino-5-chloro-4-ethylbenzolsulfonsäure (Homo-CLT-Säure) auf das Kaliumsalz der 2-Hydroxynaphthalin-6-sulfonsäure (Kaliumsalz der Schäffer-Säure) gekuppelt und mit Strontium verlackt.

### Vergleichsbeispiel 3

Wie in der japanischen Auslegeschrift 50-24988 (Beispiel 1) beschrieben, wird 4-Amino-toluolsulfonsäure auf β-Oxynaphthoesäure gekuppelt und mit Calciumchloridlösung verlackt.

### Vergleichsbeispiel 4

Wie in der japanischen Auslegeschrift 50-24988 (Beispiel 2) beschrieben, wird 2-Chlor-4-aminotoluol-5-sulfonsäure auf β-Oxynaphthoesäure gekuppelt und mit Calciumchloridlösung verlackt.

### Anwendungsbeispiele:

Das Pigment aus Beispiel 1 liefert im AM-Lack eine überlackierechte, farbstarke Lackierung, die eine hohe Lichtechtheit aufweist. Die Überlackierechtheit beträgt 5 gegen den 5-stufigen Graumaßstab "Anbluten" nach DIN 54002. Zur Farbstärke und Lichtechtheit: siehe Tabelle 1.

**Tabelle 1**

| (Beispiele 1 bis 4)*: | | | | | | | |
|---|---|---|---|---|---|---|---|
| Bsp. | Amin: | Kupplungskomponente: | Farbe: | M | FST | LiE/VT | LiE/AH |
| 1 | 4-Chloranthranilsäure | Schäffer-Säure | rot | Sr²⁺ | 1:2,68 | 8 | 6 |
| 2 | Anthranilsäure | Schäffer-Säure | rot | Sr²⁺ | 1:2,01 | 7 | 5 |
| 3 | 4-Chloranthranilsäure | Schäffer-Säure | orange | Ca²⁺ | 1:2,81 | 8 | 6-7 |
| 4 | Anthranilsäure | F-Säure | orange | Sr²⁺ | 1:2,17 | 7 | 5-6 |

**Tabelle 2**

| (Vergleichsbeispiele 1 bis 4)*: | | | | | | | |
|---|---|---|---|---|---|---|---|
| Bsp. | Amin: | Kupplungskomponente: | Farbe: | M | FST | LiE/VT | LiE/AH |
| 1 | CLT-Säure | Schäffer-Säure | orange | Sr²⁺ | 1:1,92 | 6 | 4 |
| 2 | Homo-CLT-Säure | Schäffer-Säure | rot | Sr²⁺ | 1:1,96 | 6-7 | 3-4 |
| 3 | 4-Aminotoluolsulfonsäure | beta-ortho-Naphtholcarbonsäure | rot | Ca²⁺ | 1:0.89 | 6 | 2-3 |
| 4 | 2-Chlor-4-aminotoluol-5-sulfonsäure | beta-ortho-Naphtholcarbonsäure | rot | Ca²⁺ | 1:1.40 | 6-7 | 3-4 |

| | | | | | | | |
|---|---|---|---|---|---|---|---|
| * Legende zu den Tabellen 1 und 2: M = Metallkation FST = Farbstärke LiE/VT = Lichtechtheit Vollton LiE/AH = Lichtechtheit Aufhellung | | | | | | | |

Die Farbstärke (FST) gibt an, wie viele Teile TiO₂ notwendig sind, um 1 Teil Buntpigment auf 1/3 Standard-Farbtiefe (DIN 53235) zu bringen: 1:x TiO₂.

Die Lichtechtheit wurde gegen die 8-stufige Blauskala in Anlehnung an DIN 54003 im Vollton und in der Aufhellung bestimmt. "8" entspricht der höchsten, "1" der niedrigsten Lichtechtheit.

Das Pigment aus Beispiel 1 wurde zur Einfärbung von Weich-Polyvinylchlorid und High Density Polyethylen verwendet. Die Ausfärbungen wurden auf die übliche Weise durch Walzen der Komponenten auf einem Laborwalzwerk bei höherer Temperatur (Weich-PVC: 130°C und 160°C; HDPE 155°C) hergestellt. Bei der Verzugsprüfung der Ausfärbung in HDPE wurde mit dem Pigment aus Beispiel 1 kein Verzug festgestellt (Verzug bei 280°C kleiner 0,5 %).

Des weiteren wurde mit dem Pigment aus Beispiel 1 eine Pigment-Präparation auf der Basis von Licowax PE 520 auf die übliche Weise hergestellt und mit Kunststoffgranulat (®Hostalen GC 7260) mittels eines handelsüblichen Extruders extrudiert und granuliert. Das erhaltene Granulat wurde anschließend auf einer Spritzgussmaschine bei 200°C zu tropfenförmigen, 2,5 mm dicken Spritzlingen verarbeitet. Die Hitzebeständigkeit des Pigmentes aus Beispiel 1 wurde im Spritzgussverfahren nach DIN 53772 ermittelt. Das Pigment ist bis 280°C hitzebeständig.

## Patentansprüche

1. Verbindung der allgemeinen Formel (1) 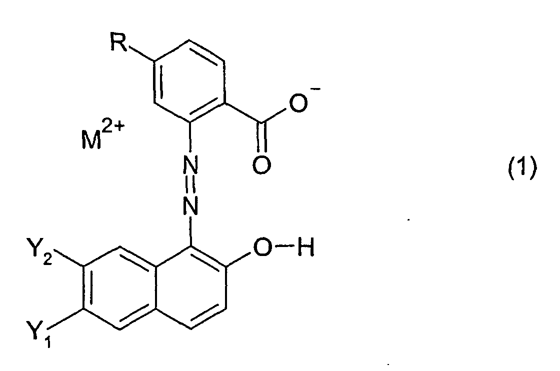 wobei
R die Bedeutung H oder Cl,
M²⁺ die Bedeutung Ca²⁺ oder Sr²⁺,
Y₁ = H und Y₂ = SO₃⁻, oder Y₁ = SO₃⁻ und Y₂ = H haben.

2. Verbindung nach Anspruch 1, **dadurch gekennzeichnet, dass**
R = H, M²⁺ = Sr²⁺, Y₁ = SO₃⁻ und Y₂ = H bedeuten.

3. Verbindung nach Anspruch 1, **dadurch gekennzeichnet, dass**
R = Cl; M²⁺ = Sr²⁺, Y₁ = SO₃⁻ und Y₂ = H bedeuten.

4. Verbindung nach Anspruch 1, **dadurch gekennzeichnet, dass**
R Cl; M²⁺ = Ca²⁺, Y₁ = SO₃ und Y₂ = H bedeuten.

5. Verbindung nach Anspruch 1, **dadurch gekennzeichnet, dass**
R = H; M²⁺= Sr²⁺, Y₁ = H und Y₂= SO₃⁻ bedeuten.

6. Verfahren zur Herstellung einer Verbindung gemäß mindestens einem der Ansprüche 1 bis 5, **dadurch gekennzeichnet, dass** Anthranilsäure oder 4-Chloranthranilsäure diazotiert wird, das entstandene Diazoniumsalz mit einer Naphtholsulfonsäure der Formel (2) gekuppelt wird 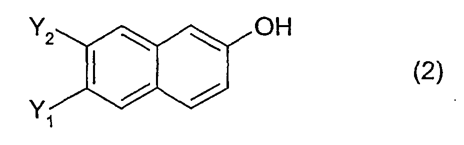 und die entstandene Monoazoverbindung mit einem Calcium- oder Strontiumsalz verlackt wird.

7. Verwendung einer Verbindung gemäß mindestens einem der Ansprüche 1 bis 5 zum Pigmentieren von hochmolekularen organischen Materialien, von Lacken, Anstrichstoffen, Druckfarben, elektrophotographischen Tonern und Entwicklern, Pulvern und Pulverlacken, Tinten und zur Einfärbung von Saatgut.

## Claims

1. A compound of the general formula (1) 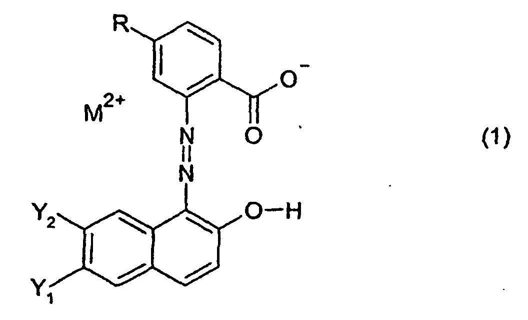 where
R is H or Cl,
M²⁺ is Ca²⁺ or Sr²⁺,
Y₁ = H and Y₂ = SO₃⁻; or Y₁ = SO₃⁻ and Y₂ = H.

2. A compound as claimed in claim 1, wherein
R = H, M²⁺ = Sr²⁺, Y₁ = SO₃⁻ and Y₂ = H.

3. A compound as claimed in claim 1, wherein
R = Cl; M²⁺ = Sr²⁺, Y₁ = SO₃⁻ and Y₂ = H.

4. A compound as claimed in claim 1, wherein
R = Cl; M²⁺ = Ca²⁺, Y₁ = SO₃⁻ and Y₂ = H.

5. A compound as claimed in claim 1, wherein
R = H; M²⁺ = Sr²⁺, Y₁ = H and Y₂ = SO₃⁻.

6. A process for preparing a compound as per at least one of claims 1 to 5, which comprises diazotizing anthranilic acid or 4-chloroanthranilic acid, coupling the resultant diazonium salt with a naphtholsulfonic acid of the general formula (2) calcium or and laking the resultant monoazo compound with a calcium or strontium salt.

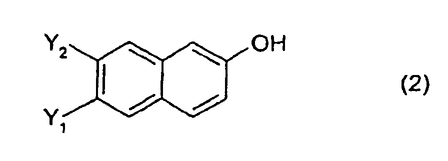

7. Use of a compound as per at least one of claims 1 to 5 for pigmentation of macromolecular organic materials, of varnishes, paints, printing inks, electrophotographic toners and developers, powders and powder coatings, inks and for coloration of seed.

## Revendications

1. Composé de formule générale (1) 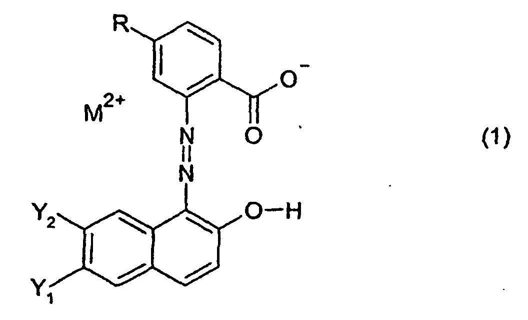 dans laquelle
R = H ou Cl,
M²⁺ = Ca²⁺ ou Sr²⁺,
Y₁ = H et Y₂ = SO₃⁻ ou bien Y₁ = SO₃⁻ et Y₂ = H.

2. Composé selon la revendication 1, **caractérisé en ce que**
R = H, M²⁺ = Sr²⁺, Y₁ = SO₃⁻ et Y₂ = H.

3. Composé selon la revendication 1, **caractérisé en ce que**
R = Cl, M²⁺ = Sr²⁺, Y₁ = SO₃⁻ et Y₂ = H.

4. Composé selon la revendication 1, **caractérisé en ce que**
R = Cl, M²⁺ = Ca²⁺, Y₁ = SO₃⁻ et Y₂ = H.

5. Composé selon la revendication 1, **caractérisé en ce que**
R= H, M²⁺ = Sr²⁺, Y₁ = H et Y₂ = SO₃⁻.

6. Procédé de préparation d'un composé selon au moins l'une des revendications 1 à 5, **caractérisé en ce que** l'on diazote de l'acide anthranilique ou de l'acide 4-chloro-anthranilique, **en ce que** l'on fait copuler le sel de diazonium formé avec un acide naphtolsulfonique de formule (2) 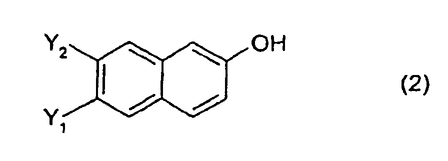 et **en ce que** l'on transforme le composé monoazoïque formé en pigments avec un sel de calcium ou de strontium.

7. Utilisation d'un composé selon au moins l'une des revendications 1 à 5 pour la pigmentation de matières organiques à haute masse moléculaire, de vernis, de peintures, d'encres d'imprimerie, de toners électrophotographiques et de révélateurs, de poudres et de vernis en poudre, d'encres, ainsi que pour la coloration de semences.
